# EUROPEAN PATENT APPLICATION

(11) **EP 3 486 576 A1**
(43) Date of publication of application: **22.05.2019**
(21) Application number: 17875441.2
(22) Date of filing: 07.11.2017
(51) Int. Cl.: F24F 11/56, A01G 9/24, F24F 5/00, F24F 11/88, F24F 11/89, F24F 110/00

(54) **CHILLING UNIT SYSTEM, TEMPERATURE MANAGEMENT SYSTEM, REMOTE CONTROLLER, AND CONTROL METHOD**

(30) Priority: 29.11.2016 JP 2016230975
(71) Applicant: Mitsubishi Heavy Industries Thermal Systems, Ltd., Tokyo 108-8215 (JP)
(72) Inventor: OKADA Takuya, Tokyo 108-8215 (JP); AKATSUKA Kei, Tokyo 108-8215 (JP)
(74) Representative: Cabinet Beau de Loménie
(86) International application number: PCT/JP2017/040063
(87) International publication number: WO 2018/100976

(57) **Abstract**

A chilling unit system includes a chilling unit configured to supply a refrigerant to piping laid on a load side, a remote controller which is provided in a space on the load side and has a temperature sensor for detecting a temperature of the space, and a control device configured to control the chilling unit, in which the control device controls the chilling unit such that a temperature of the refrigerant is a temperature corresponding to a temperature detected by the temperature sensor.

## Description

### [Technical Field]

The present invention relates to a chilling unit system, a temperature management system, a remote controller, and a control method.

Priority is claimed on Japanese Patent Application No. 2016-230975, filed November 29, 2016, the content of which is incorporated herein by reference.

### [Background Art]

Conventionally, chilling units are widely used in air conditioners and the like.

A chilling unit itself is a heat source device that cools and heats a refrigerant, and requires a heat exchanger such as a fan coil on a load side. Generally, in an air conditioner including a chilling unit and a fan coil, temperature adjustment of the load side is performed by the fan coil and the chilling unit heats or cools a refrigerant to a predetermined set temperature. In other words, since an operation of the chilling unit depends on control of the fan coil and the like, it is difficult for the chilling unit itself to ascertain the condition of an air conditioning load.

In addition, in the field of agriculture, to promote the cultivation of agricultural crops, for example, by laying piping in a vinyl house and causing warm water heated with a boiler to circulate through the piping, control to change the temperature in the vinyl house to a desired temperature is performed.

As a related technique, Patent Document 1 discloses a heating and cooling system that aims to expand warm air or cold air evenly throughout the house by installing an indoor unit and an outdoor unit of a heat pump respectively inside and outside a vinyl house, sending warm air or cold air discharged by the indoor unit in a longitudinal direction of a room using a circulation fan installed in the vicinity of a discharge port, and generating a flow of warm air or cold air. Patent Document 2 discloses an air conditioning system in which a plurality of heat pump type air conditioners, combustion type heating devices, circulation fans, and a control device for controlling them are installed in a cultivation house, a heater with lower CO₂ emission and operation fee is used preferentially while an operation of the circulation fan is devised to make the temperature and humidity of a room uniform, and a heating capability shortage is avoided by using another heater if reduction in capability of these heaters can be predicted.

### [Citation List]

### [Patent Literature]

[Patent Document 1] Japanese Unexamined Patent Application, First Publication No.2010-17093
[Patent Document 2] Japanese Unexamined Patent Application, First Publication No.2010-236703

### [Summary of Invention]

### [Technical Problem]

Incidentally, when a chilling unit is used for an agricultural use, installation of a new fan coil becomes necessary, which increases the cost. Especially if the scale is large, the cost becomes large. In addition, since straw and dust piled outdoors adhere to a fin of the fan coil fin and cause clogging, regular maintenance is necessary, and thus the fan coil cannot always be installed in a vinyl house for reasons such as that it is difficult to use. If the fan coil is not installed, the temperature inside the vinyl house is managed by circulating a refrigerant through existing piping laid in the vinyl house. However, since the chilling unit does not have a mechanism to control the cooling and heating of the refrigerant according to a load as described above, the chilling unit cannot adjust the temperature of the refrigerant circulating through the piping according to the temperature in the vinyl house. Therefore, the temperature inside the vinyl house may become too high or too low. In order to avoid such a situation, if a temperature sensor is separately provided in the vinyl house or a control device for providing an operation instruction to the chilling unit according to a detected temperature is provided, for example, this control device is specially developed for this purpose, and thus the cost may increase.

An object of the present invention is to provide a chilling unit system, a temperature management system, a remote controller, and a control method which can solve the above problems.

### [Solution to Problem]

According to a first aspect of the present invention, a chilling unit system includes a chilling unit configured to supply a refrigerant to piping laid on a load side, a remote controller which is provided in a space on the load side and has a temperature sensor for detecting a temperature of the space, and a control device configured to control the chilling unit, in which the control device controls the chilling unit such that a temperature of the refrigerant is a temperature corresponding to a temperature detected by the temperature sensor.

According to a second aspect of the present invention, in the chilling unit system, the remote controller further includes an operation reception unit which is configured to receive a selection of one of a refrigerant temperature adjustment operation and a load side temperature adjustment operation, the control device is configured to control the chilling unit such that a temperature of the refrigerant is a predetermined set temperature when the operation reception unit receives a selection of the refrigerant temperature adjustment operation, and is configured to control the chilling unit such that the temperature of the refrigerant is a temperature corresponding to a temperature detected by the temperature sensor when the operation reception unit receives a selection of the load side temperature adjustment operation.

According to a third aspect of the present invention, in the chilling unit system, the remote controller further includes a set temperature reception unit which is configured to receive setting correspondence information in which correspondence between a temperature of the load side and a set temperature of the refrigerant is determined, the control device is configured to control the chilling unit such that the temperature of the refrigerant is a temperature corresponding to a temperature detected by the temperature sensor on the basis of setting correspondence information received by the set temperature reception unit when the operation reception unit receives a selection of the load side temperature adjustment operation.

According to a fourth aspect of the present invention, a cooling operation which performs cooling of the space on the load side is included in the load side temperature adjustment operation in the chilling unit system.

According to a fifth aspect of the present invention, a heating operation which performs heating of the space on the load side is included in the load side temperature adjustment operation in the chilling unit system.

According to a sixth aspect of the present invention, a snow-melting operation for melting snow on the load side is included in the load side temperature adjustment operation in the chilling unit system.

According to a seventh aspect of the present invention, a temperature management system includes one or a plurality pieces of piping, and the chilling unit system which is configured to supply a refrigerant circulating through the piping.

According to an eighth aspect of the present invention, a temperature management system includes piping laid in a room of a vinyl house, and the chilling unit system which is configured to supply a refrigerant circulating through the piping.

According to a ninth aspect of the present invention, the temperature management system further includes snow-melting piping laid on at least one of a roof and an outer wall of the vinyl house, and the chilling unit system described in the sixth aspect, which is configured to supply a refrigerant circulating through the snow-melting piping.

According to a tenth aspect of the present invention, a temperature management system includes snow-melting piping laid on at least one of the roof and an outer wall of a vinyl house, and the chilling unit system described in the sixth aspect, which is configured to supply a refrigerant circulating through the snow-melting piping.

According to an eleventh aspect of the present invention, a remote controller is a remote controller of a chilling unit which is configured to supply a refrigerant to piping laid on a load side, is installed in a space on the load side, and has a temperature sensor for detecting the temperature of the space of the load side.

According to a twelfth aspect of the present invention, a control method includes transmitting, by a remote controller of a chilling unit which is provided in a space on a load side and has a temperature sensor for detecting a temperature of the space, temperature information detected by the temperature sensor to a control device of the chilling unit, and performing, by the control device, control such that the temperature of a refrigerant supplied by the chilling unit is a temperature corresponding to temperature information received from the temperature sensor.

### [Advantageous Effects of Invention]

According to the chilling unit system, the temperature management system, the remote controller, and the control method described above, it is possible to supply a refrigerant at a temperature corresponding to a load using only a chilling unit without using a fan coil.

### [Brief Description of Drawings]

Fig. 1 is a diagram which shows a configuration of a temperature management system according to an embodiment of the present invention.
Fig. 2 is a block diagram of a remote controller in the embodiment of the present invention.
Fig. 3A is a first diagram which shows an example of a display screen of the remote controller in the embodiment of the present invention.
Fig. 3B is a second diagram which shows an example of the display screen of the remote controller in the embodiment of the present invention.
Fig. 4A is a third diagram which shows an example of the display screen of the remote controller in the embodiment of the present invention.
Fig. 4B is a fourth diagram which shows an example of the display screen of the remote controller in the embodiment of the present invention.
Fig. 4C is a fifth diagram which shows an example of the display screen of the remote controller in the embodiment of the present invention.
Fig. 4D is a sixth diagram which shows an example of the display screen of the remote controller in the embodiment of the present invention.
Fig. 5 is a flowchart at the time of an air conditioning operation of a temperature management system according to the embodiment of the present invention.
Fig. 6 is an application example of the temperature management system in the embodiment of the present invention.
Fig. 7A is a seventh diagram which shows an example of the display screen of the remote controller in the embodiment of the present invention.
Fig. 7B is an eighth diagram which shows an example of the display screen of the remote controller in the embodiment of the present invention.
Fig. 8A is a ninth diagram which shows an example of the display screen of the remote controller in the embodiment of the present invention.
Fig. 8B is a tenth diagram which shows an example of the display screen of the remote controller in the embodiment of the present invention.
Fig. 9 is a diagram which shows a configuration example of a conventional temperature management system.

### [Description of Embodiments]

### <Embodiments>

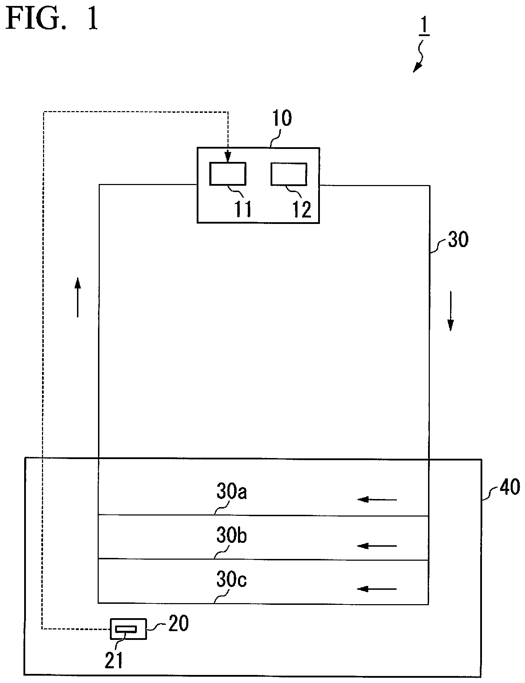

Hereinafter, a temperature management system according to an embodiment of the present invention will be described with reference to Figs. 1 to 9.

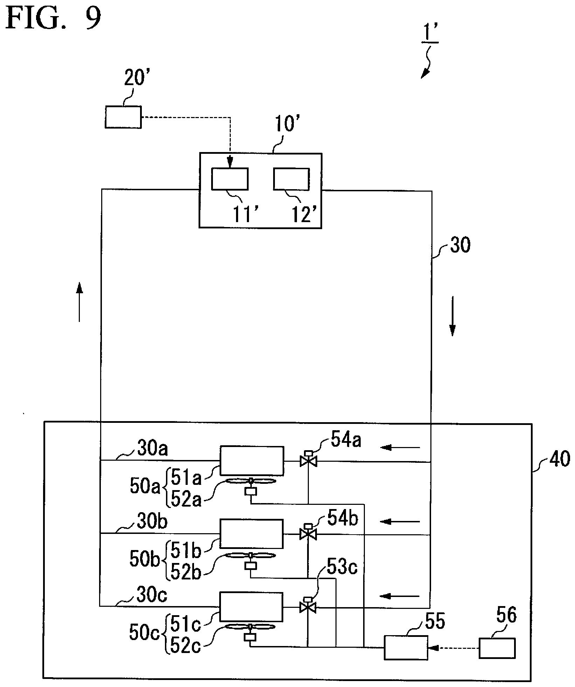

Fig. 1 is a diagram which shows a configuration example of a temperature management system according to the embodiment of the present invention. Fig. 9 is a diagram which shows a configuration example of a conventional temperature management system.

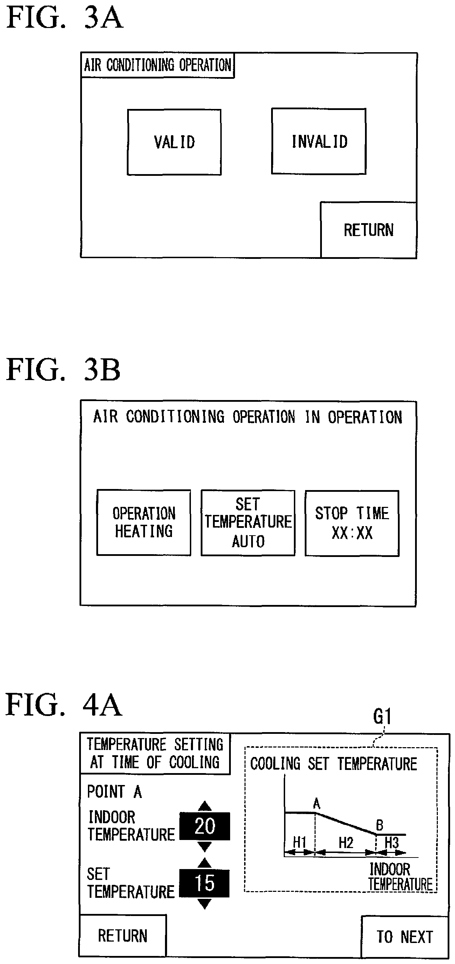

As shown in Fig. 1, a temperature management system 1 according to the embodiment of the present invention is configured to include a chilling unit 10, a remote controller 20 of the chilling unit 10, and piping 30. The chilling unit 10 is a device that supplies a refrigerant to a load. The chilling unit 10 includes a control device 11 and a refrigerant circuit 12. The control device 11 receives information indicating a set temperature of the refrigerant from the remote controller 20, and controls an operation of the refrigerant circuit 12 such that the refrigerant is at a desired temperature on the basis of the information. As a result, the chilling unit 10 supplies the refrigerant cooled or heated to the desired temperature. The information indicating the set temperature of the refrigerant will be described with reference to Figs. 4A to 4D.

The refrigerant supplied by the chilling unit 10 flows through the piping 30 in a direction of an arrow, and is transported to a load side (room 40). In the room 40, refrigerants flowing through piping 30a, 30b, and 30c into which the piping 30 branches exchange heat with air in the room 40, and the room 40 is cooled or heated. The refrigerant after the heat exchange flows through the piping 30 to return to the chilling unit 10, and is cooled or heated to a desired temperature again to circulate through a similar path. In the present embodiment, the refrigerant is, for example, water. The room 40 includes, for example, an office or a shopping mall as in general air conditioning applications, or a room such as a vinyl house, a factory, a livestock barn, or a poultry house.

In the present specification, a chilling unit system which includes the chilling unit 10 and the remote controller 20 will be described.

The remote controller 20 is installed in the room 40 which is a space on the load side. The remote controller 20 includes a temperature sensor such as the thermistor, detects the temperature of the room 40, and transmits information on the temperature to the control device 11. The control device 11 adjusts the temperature of a refrigerant on the basis of the temperature information acquired from the remote controller 20.

Next, the temperature management system 1 of the present embodiment will be compared with a conventional temperature management system 1' shown in Fig. 9. In the conventional temperature management system 1' as shown in Fig. 9, fan coil units 50a, 50b, and 50c are provided on the load side. As the fan coil unit 50a and the like are installed, a remote controller 56 and a control device 55 are provided. The fan coil unit 50a includes a heat exchanger 51a and a fan 52a. A flow control valve 54a for adjusting a flow rate of a refrigerant flowing into the heat exchanger 51a is provided on an upstream side of the fan coil unit 50a of the piping 30a. The same applies to the fan coil units 50b and 50c. The remote controller 56 receives an input such as a set temperature of the room 40 from a user, and transmits setting information to the control device 55. The control device 55 controls rotational speeds of fans 52a to 52c and the degrees of opening of flow control valves 54a o 54c on the basis of the setting information input by a user.

In the conventional temperature management system 1', a remote controller 20' of a chilling unit 10' is used for setting input of a refrigerant temperature. That is, the chilling unit 10' supplies a refrigerant at a set temperature input using the remote controller 20' regardless of a set temperature of the load side (room 40). Then, fan coil units 50a to 50c are used for temperature adjustment on the load side.

In the case of the conventional temperature management system 1', since the fan coil units 50a to 50c are required, the cost is higher than that of the temperature management system 1 of the present embodiment (Fig. 1).

On the other hand, in the temperature management system 1 of the present embodiment, a temperature sensor 21 is provided in the remote controller 20 and the remote controller 20 is further installed in a space on the load side, and thereby a refrigerant temperature is adjusted in accordance with the temperature on the load side detected by the temperature sensor 21, and the refrigerant is supplied to the load. As a result, it is possible to perform temperature management of the space on the load side according to a low cost system which does not require the fan coil unit 50a and the like.

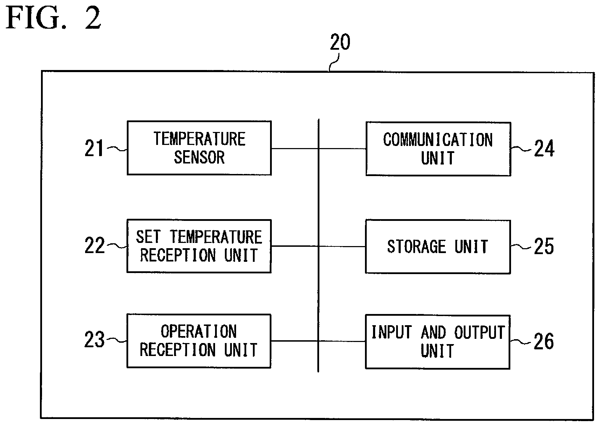

Next, the remote controller 20 of the embodiment will be described with reference to Fig. 2.

Fig. 2 is a block diagram of the remote controller in the embodiment of the present invention.

As shown in Fig. 2, the remote controller 20 includes a temperature sensor 21, a set temperature reception unit 22, an operation reception unit 23, a communication unit 24, a storage unit 25, and an input and output unit 26.

The temperature sensor 21 detects the temperature of a space in which the remote controller 20 is installed. The temperature sensor 21 is, for example, a thermistor.

The set temperature reception unit 22 receives an input of setting correspondence information in which a correspondence between the temperature of the load side and the set temperature of the refrigerant is determined in a "air conditioning operation" to be described next. The set temperature reception unit 22 receives an input of the set temperature of the refrigerant in a "water temperature operation" to be described next.

The operation reception unit 23 receives a selection of either "water temperature operation" or "air conditioning operation." "Water temperature operation" is an operation in which the control device 11 operates the refrigerant circuit 12 such that the temperature of a refrigerant supplied by the chilling unit 10 is a predetermined temperature (a set temperature of a refrigerant received by the set temperature reception unit 22). "Air conditioning operation" is an operation in which the control device 11 controls the refrigerant circuit 12 such that the temperature of the refrigerant supplied by the chilling unit 10 is set as the set temperature based on the setting correspondence information in which the correspondence is determined, which is received by the set temperature reception unit 22, and the temperature detected by the temperature sensor 21.

The communication unit 24 transmits information received by the set temperature reception unit 22 and the operation reception unit 23, and temperature information detected by the temperature sensor 21 to the control device 11.

The storage unit 25 stores information received by the set temperature reception unit 22 or the operation reception unit 23, and the like.

The input and output unit 26 includes an input device such as a button and a touch panel, and a display device such as a liquid crystal display. The input and output unit 26 receives an input such as a set temperature by a user. The input and output unit 26 displays images of screens for various types of settings, an image displaying a currently operating operation, and the like.

Next, an example of the operation of the present embodiment will be described. In the temperature management system of the present embodiment, there are two operations of "air conditioning operation" and "water temperature operation."

Fig. 3A is a first diagram which shows an example of a display screen of the remote controller in the embodiment of the present invention. Fig. 3B is a second diagram which shows an example of the display screen of the remote controller in the embodiment of the present invention.

Fig. 3A shows an example of a setting screen for switching "air conditioning operation" and "water temperature operation." In a setting screen shown in Fig. 3A, if a user selects "valid," the operation is set to "air conditioning operation." On the other hand, if the user selects "invalid," a menu screen (not shown) is displayed and "water temperature operation" can be selected from the menu screen. When the operation is set to "air conditioning operation," the control device 11 controls the temperature of the refrigerant supplied to the load on the basis of setting correspondence information to be described next with reference to Figs. 4A to 4D and a temperature detected by the temperature sensor 21. When the operation is set to "water temperature operation," the control device 11 controls the temperature of a refrigerant to a predetermined set temperature regardless of the temperature of the load side. The predetermined temperature in "water temperature operation" may also be set by a user's input from the setting screen (not shown) displayed by the remote controller 20.

Fig. 3B shows an example of an image displayed by the input and output unit 26 when the operation is set to "air conditioning operation." The example of the image shown in Fig. 3B shows that heating (heating operation) is in operation between cooling and heating. "Set temperature AUTO" indicates that the set temperature of the refrigerant is automatically controlled in accordance with correspondence between a room temperature and the set temperature, which will be described next with reference to Figs. 4A to 4D, and in accordance with the room temperature.

Next, a method of setting the refrigerant temperature when an operation is performed during an "air conditioning operation" will be described.

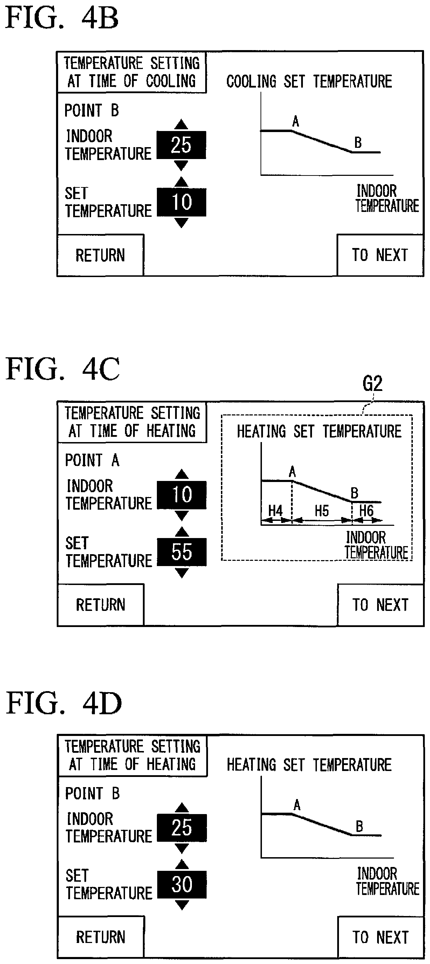

Fig. 4A is a third diagram which shows an example of the display screen of the remote controller in the embodiment of the present invention. Fig. 4B is a fourth diagram which shows an example of the display screen of the remote controller in the embodiment of the present invention. Fig. 4C is a fifth diagram which shows an example of the display screen of the remote controller in the embodiment of the present invention. Fig. 4D is a sixth diagram which shows an example of the display screen of the remote controller in the embodiment of the present invention.

Processing of the set temperature reception unit 22 receiving an input of setting correspondence information which determines the correspondence between the temperature of the load side and the set temperature of the refrigerant will be described with reference to Figs. 4A to 4D.

Fig. 4A and Fig. 4B are examples of a screen for setting a relationship between a room temperature and the temperature of the refrigerant at the time of a cooling operation, which are displayed by the input and output unit 26. Fig. 4A is a screen for setting a relationship between the room temperature and the set temperature of the refrigerant at a point A. The point A is a point indicated as "A" in a graph G1 on the upper right of the setting screen of Fig. 4A. The vertical axis of the graph G1 shows the refrigerant temperature (a cooling set temperature) at the time of the cooling operation, and a horizontal axis thereof shows the room temperature. The point A is a point which determines a relationship between an upper limit value of the refrigerant temperature and the room temperature to adjust the refrigerant temperature within a certain range in accordance with the temperature of the room 40 at the time of the cooling operation. In the case of the example of Fig. 4A, the set temperature of the refrigerant is determined to be 15 °C with respect to the room temperature equal to or lower than 20 °C. This means that the control device 11 performs control such that the temperature of the refrigerant becomes 15 °C when the temperature of the room 40 detected by the temperature sensor 21 is equal to or lower than 20 °C (a range H1).

Next, Fig. 4B is a screen for setting a relationship between the room temperature and the set temperature of the refrigerant at a point B. The point B is a point indicated as "B" in the graph G1 of Fig. 4A. The point B is a point which determines a relationship between a lower limit value of the refrigerant temperature and a room temperature at the time of the cooling operation. In the case of the example of Fig. 4B, the set temperature of the refrigerant is determined to be 10 °C with respect to the room temperature equal to or higher than 25 °C. This means that the control device 11 performs control such that the temperature of the refrigerant becomes 10 °C when the temperature of the room 40 detected by the temperature sensor 21 is equal to or higher than 25 °C (a range H3).

The graph G1 shows that the control device 11 performs control such that the temperature of the refrigerant becomes a cooling set temperature obtained by linearly interpolating the point A and the point B when the room temperature is between the lower limit value and the upper limit value (a range H2). That is, the relationship between the room temperature and the temperature of refrigerant between these limit values is represented by a line connecting the point A and the point B. A horizontal line is drawn on a left side of the point A in the graph G1, and it is shown that a cooling set temperature determined at the point A is maintained when the room temperature is lower than the point A. Likewise, a horizontal line is drawn on the right side of the point B in the graph G1, and a cooling set temperature determined at the point B is maintained even when the temperature is higher than the point B, and thereby overcooling is prevented in the specification.

Figs. 4C and 4D are examples of the screen for setting a relationship between the room temperature and the temperature of the refrigerant at the time of the heating operation. The setting method is the same as that at the time of the cooling operation.

A vertical axis of a graph G2 represents the refrigerant temperature (heating set temperature) at the time of the heating operation, and a horizontal axis represents the room temperature. Fig. 4C is a screen for setting a relationship between the room temperature and the set temperature of the refrigerant at the point A. The point A is a point which determines a relationship between an upper limit value of the refrigerant temperature within a certain range and the room temperature to adjust the refrigerant temperature in accordance with the temperature of the room 40 within this range at the time of the heating operation. In the case of the example of Fig. 4C, the set temperature of the refrigerant is determined to be 55 °C with respect to the room temperature equal to or lower than 10 °C. This means that the control device 11 performs control such that the temperature of the refrigerant becomes 55 °C when the temperature of the room 40 detected by the temperature sensor 21 is equal to or lower than 10 °C (a range H4). A horizontal line is drawn on the left side of the point A in the graph G2, and overheating is prevented in the specification by maintaining at a heating set temperature determined at the point A when the room temperature is lower than the point A. Likewise, a horizontal line is drawn on the right side of the point B in the graph G2, and it is shown that a heating set temperature determined at the point B is maintained even when the temperature is higher than the point B.

Fig. 4D shows a screen for setting a relationship between the room temperature and the set temperature of the refrigerant at a point B. The point B is a point which determines a relationship between a lower limit value of the refrigerant temperature and a room temperature at the time of the heating operation. In the case of the example of Fig. 4D, the set temperature of the refrigerant is determined to be 30 °C with respect to the room temperature equal to or higher than 25 °C. This means that the temperature of the refrigerant is set to 30 °C when the temperature of the room 40 detected by the temperature sensor 21 is equal to or higher than 25 °C (a range H6).

In the case of the room temperature indicated by the range H5, the graph G2 shows that the control device 11 performs control such that the temperature of the refrigerant becomes a heating set temperature corresponding to the temperature detected by the temperature sensor 21, which is obtained by linearly interpolating between the point A and the point B.

An appropriate set temperature of the refrigerant with respect to the room temperature at the time of the cooling operation and the heating operation is obtained by, for example, experiments or calculations in advance, and the user performs setting on the basis of a result of the calculation, and the like.

The user performs an input of a set temperature at the time of the cooling and heating operation from the setting screen of Figs. 4A to 4D. Setting information in which correspondence between the room temperature and the set temperature input by the user is determined is recorded in the storage unit 25. The communication unit 24 transmits the setting correspondence information recorded in the storage unit 25 to the control device 11. The control device 11 receives the setting correspondence information. The communication unit 24 transmits temperature information detected by the temperature sensor 21 to the control device 11. When the chilling unit 10 operates in the air conditioning operation, the control device 11 manages the temperature of the refrigerant on the basis of this information.

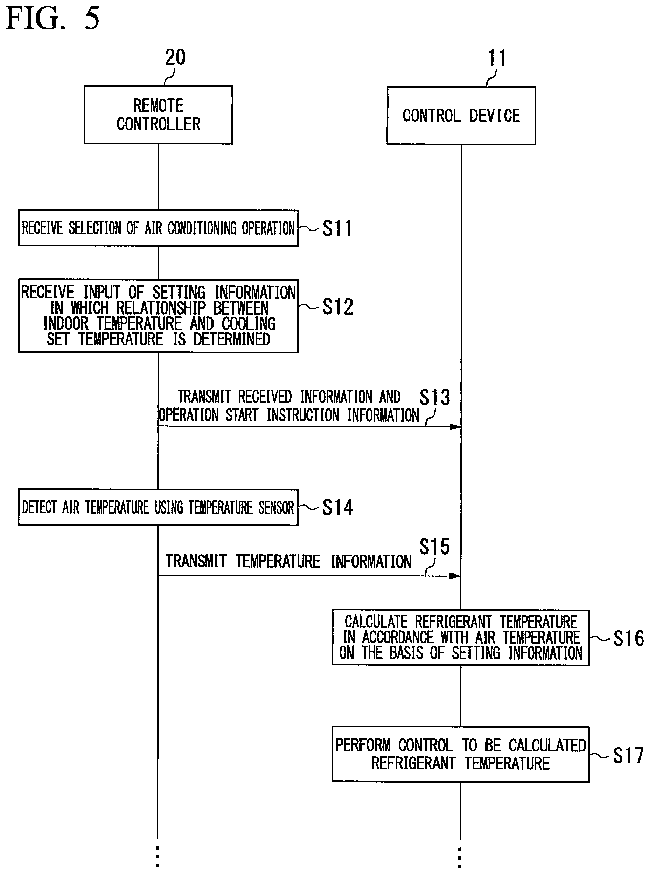

Next, an example of processing flow of the temperature management system at the time of an "air conditioning operation" operation will be described with reference to Fig. 5.

Fig. 5 is a flowchart at the time of the air conditioning operation of the temperature management system according to the embodiment of the present invention.

First, a user inputs a selection of "air conditioning operation" to the remote controller 20 as described in Figs. 3A and 3B. The operation reception unit 23 receives an input of the selection of "air conditioning operation" (step S11). The user inputs information which designates a heating operation (heating operation) or a cooling operation (cooling operation). The operation reception unit 23 receives an input of the heating operation or the cooling operation. The operation reception unit 23 stores the received information on an operation in the storage unit 25.

Next, the user inputs setting correspondence information in which the relationship between the room temperature and the set temperature of the refrigerant is determined as described in Figs. 4A to 4D. The set temperature reception unit 22 receives an input of this setting correspondence information (step S12). The set temperature reception unit 22 records the received setting correspondence information in the storage unit 25.

Next, for example, the user inputs operation start instruction information to the remote controller 20. Then, the communication unit 24 transmits the operation start instruction information together with the information received in step S11 and step S12 (step S13). The control device 11 acquires this information and records it in a storage unit (not shown). The control device 11 starts an operation of the chilling unit 10.

On the other hand, the temperature sensor 21 detects the temperature of the room 40 in the remote controller 20 (step S14). The communication unit 24 transmits temperature information (the temperature of the room 40) detected by the temperature sensor 21 to the control device 11 (step S15). The control device 11 acquires this temperature information.

Next, the control device 11 calculates the set temperature of the refrigerant corresponding to the temperature information acquired from the remote controller 20 on the basis of the setting correspondence information in which the relationship between the room temperature and the set temperature of the refrigerant is determined, which is previously recorded (step S16). For example, in the case of the heating operation, it is assumed that setting information shown in Fig. 4B is recorded. In this case, if the temperature of the room 40 detected by the temperature sensor 21 is 9 °C, the control device 11 determines the set temperature of the refrigerant to be 55 °C. If the temperature of the room 40 is 26 °C, the control device 11 determines the set temperature of the refrigerant to be 30 °C. For example, if the temperature of the room 40 is between 10 °C and 25 °C, a "heating set temperature" of a point corresponding to this temperature in a straight line connecting the point A and the point B is determined to be the set temperature of the refrigerant.

Next, the control device 11 controls the refrigerant circuit 12 such that the temperature of the refrigerant is the set temperature of the refrigerant calculated in step S16. As a result, the temperature of the room 40 can be managed to be a desired temperature.

The same applies to processing at the time of a "hot water operation". That is, the user inputs "hot water operation" as the operation, and the set temperature of the refrigerant (for example, x °C) to the remote controller 20. Then, the operation reception unit 23 receives an input of a selection of "hot water operation," and the set temperature reception unit 22 receives an input of the set temperature x °C of the refrigerant. Next, if the user inputs operation start instruction information to the remote controller 20, the communication unit 24 transmits information on the selected operation ("hot water operation"), the refrigerant set temperature (x °C), and the operation start instruction information to the control device 11. The control device 11 acquires this information and records it in the storage unit (not shown). The control device 11 starts an operation of the chilling unit 10, and controls the refrigerant circuit 12 such that the temperature of the refrigerant becomes x °C.

The embodiment in which the remote controller 20 is installed in the room 40 to manage the temperature of the room 40 has been described. The temperature management system 1 of the present embodiment can be used for temperature management in, for example, a vinyl house. According to the present embodiment, since the fan coil unit 50a and the like are not required, the cost can be reduced. Conventionally, piping is often laid in a vinyl house. This piping is laid to circulate hot water heated by a boiler for room temperature management in the vinyl house. In the temperature management system 1 of the present embodiment, since existing piping can be used, the cost for introducing the system can be reduced. As a result, if the temperature management system 1 of the present embodiment is introduced, for example, in a large-scale farm, a large cost reduction effect can be obtained.

If a fan coil is used on a farm or the like, problems such as clogging of fins occur, but since the temperature management system 1 does not require the fan coil on the load side, such problems will not occur. The temperature management system 1 of the present embodiment is also suitable for temperature management of a livestock barn, a poultry house, and a factory.

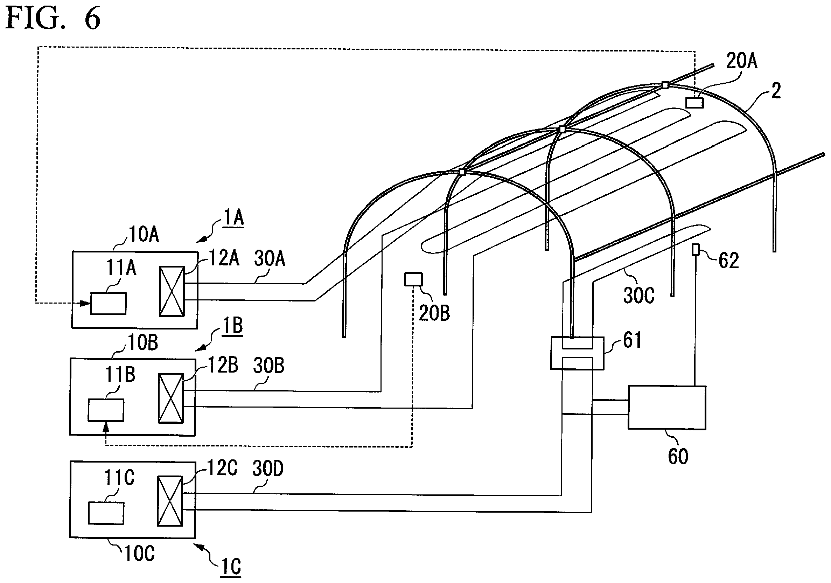

Incidentally, snow cover can be a problem in a vinyl house in a cold region. The temperature management system 1 can also be used as a snow-melting system for snow piled up on a vinyl house in addition to room temperature management in the vinyl house. Fig. 6 shows an example in which the temperature management system 1 is applied to the room temperature management and snow-melting of a vinyl house 2. In this example, the temperature management system 1 is also used for soil temperature management.

Fig. 6 shows temperature management systems 1A, 1B, and 1C which are examples of applying the temperature management system in the embodiment of the present invention to the field of agriculture. The temperature management system 1A is the snow-melting system of the vinyl house 2. The temperature management system 1B is the room temperature management system of the vinyl house 2. The temperature management system 1C is the temperature management system of soil in the vinyl house 2. In Fig. 6, the chilling units 10A, 10B, and 10C are installed outside the room of the vinyl house 2. Piping 30A, 30B, 30C, and 30D circulating through the inside and outside of the vinyl house 2 are laid.

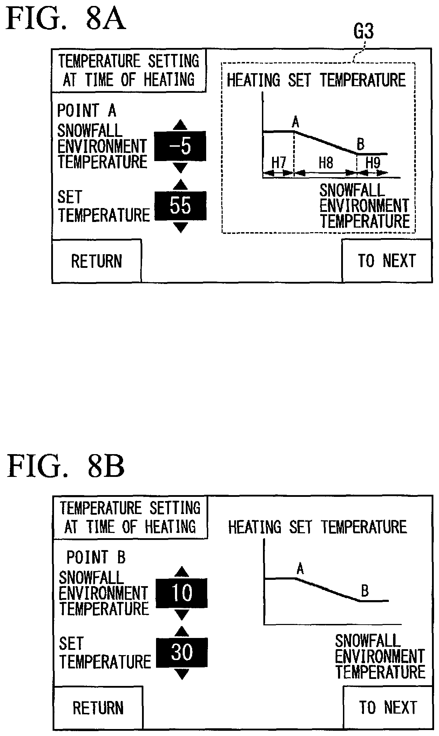

The piping 30A is a snow-melting pipe provided along the roof and an outer wall of the vinyl house 2. A refrigerant such as water supplied by the chilling unit 10A circulates through the piping 30A, and melts snow accumulated on the roof with heat at the time of snowfall. The remote controller 20A is installed in an environment in which the temperature of the snowfall environment can be detected (for example, over the inside of the vinyl house 2). The chilling unit 10A controls the refrigerant temperature in accordance with the temperature inside the vinyl house detected by the temperature sensor 21A of the remote controller 20A, and supplies the refrigerant at a temperature required for snow-melting to the piping 30A. A setting example of setting correspondence information in which a relationship between an external temperature and a set temperature of the refrigerant in the case of using a snow-melting system is determined will be described below with reference to Fig. 8.

The piping 30B is provided to longitudinally cross the inside of the vinyl house 2 for a plurality of times. A refrigerant such as water supplied by the chilling unit 10B circulates through the piping 30B and maintains a temperature inside the vinyl house 2 at a temperature suitable for the cultivation of agricultural crops. The remote controller 20B is installed in the vinyl house 2. The chilling unit 10B adjusts the temperature of the refrigerant in accordance with the temperature in the house detected by the temperature sensor 21B of the remote controller 20B, and supplies the refrigerant at the temperature required for maintaining a desired room temperature to the piping 30B. The temperature of the refrigerant circulating through the piping 30B is managed according to the setting correspondence information described with reference to Figs. 4A to 4D.

The piping 30C is provided in the ground in the vinyl house 2. A refrigerant such as water managed at a predetermined temperature circulates around the piping 30C, and maintains a soil temperature at a temperature suitable for the cultivation of agricultural crops. Instead of water, a solution may be caused to circulate through the piping 30C to maintain the temperature of soil and supply necessary nutrients to the soil. The temperature of the refrigerant circulating through the piping 30C is maintained at a predetermined temperature by the heat exchanger 61.

The piping 30D causes a refrigerant (heating refrigerant) supplied by the chilling unit 10C to circulate therethrough and supplies it to the heat exchanger 61. Here, the chilling unit 10C is operated according to "water temperature operation," and the temperature of the heating refrigerant supplied by the chilling unit 10C is kept at a predetermined temperature. The refrigerant circulating through the piping 30C is heated by the heat exchanger 61 exchanging heat with the heating refrigerant, but if the temperature of the refrigerant circulating in the soil is lower than a predetermined temperature (for example, 5 °C), the boiler 60 may be operated and the heating refrigerant may be further heated.

Here, although a case in which the chilling unit 10C used for soil temperature management is operated in "water temperature operation" has been described as an example, the chilling unit 10C may also be operated in "air conditioning operation" in which the refrigerant temperature is controlled in accordance with the temperature of soil by installing, for example, the remote controller 20C in the ground.

As shown in Fig. 6, if the temperature management system 1 of the present embodiment is used, the user can easily perform a switch such that the temperature of the refrigerant supplied by the chilling unit 10 is a temperature suitable for an application and various types of temperature management (soil, room, snow-melting) required for an operation of the vinyl house 2 merely by selecting "snow-melting operation," "air conditioning operation," or "hot water operation" from the remote controller 20.

Next, an example of a setting method of a "snow-melting operation" will be described.

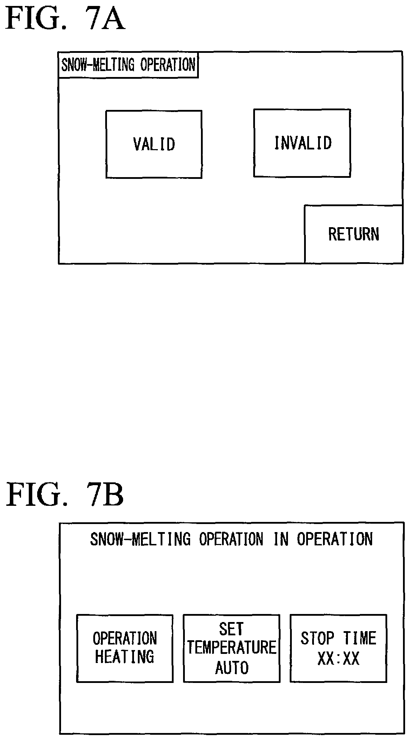

Fig. 7A is a seventh diagram which shows an example of the display screen of the remote controller in the embodiment of the present invention. Fig. 7B is an eighth diagram which shows an example of the display screen of the remote controller in the embodiment of the present invention.

Fig. 7A shows an example of a setting screen of "snow-melting operation." In the setting screen shown in Fig. 7A, if the user selects "valid", the operation is set to "snow-melting operation". On the other hand, if the user selects "invalid," the setting screen returns to a menu screen (not shown). In the menu screen, it is possible to select "water temperature operation" or "air conditioning operation" in addition to "snow-melting operation."

When the operation is set to "snow-melting operation", the control device 11 subsequently controls the temperature of the refrigerant on the basis of the setting correspondence information described in Figs. 8A and 8B and the temperature detected by the temperature sensor 21.

Fig. 7B shows an example of an image displayed by the input and output unit 26 when "snow-melting operation" is set as the operation. In the case of "snow-melting operation", it operates in the heating operation as shown in Fig. 7B. "Set temperature AUTO" indicates that the set temperature of the refrigerant is automatically controlled in accordance with correspondence between the temperature and the set temperature of the snowfall environment next exemplified in Figs. 8A and 8B and an external temperature (snowfall environment temperature).

Next, processing of receiving, by the set temperature reception unit 22, an input of setting correspondence information in which correspondence between the snowfall environment temperature and the set temperature of the refrigerant is determined will be described with reference to Figs. 8A and 8B.

Fig. 8A is a ninth diagram which shows an example of the display screen of the remote controller in the embodiment of the present invention. Fig. 8B is a tenth diagram which shows an example of the display screen of the remote controller in the embodiment of the present invention.

Figs. 8A and 8B are examples of screens for setting a relationship between the snowfall environment temperature and the refrigerant temperature at the time of the snow-melting operation. The setting method is the same as that in the case of "air conditioning operation" described in Figs. 4A to 4D. A vertical axis of a graph G3 shows the refrigerant temperature (heating set temperature) at the time of the "snow-melting operation", and the horizontal axis shows the snowfall environment temperature. Fig. 8A is a screen for setting the relationship between the snowfall environment temperature and the set temperature of the refrigerant at a point A. The point A is a point which determines a relationship between the upper limit value of the refrigerant temperature in a certain range and the snowfall environment temperature to adjust the refrigerant temperature within the range in accordance with the snowfall environment temperature at the time of the snow-melting operation. In the case of the example of Fig. 8A, the set temperature of the refrigerant is determined to be 55 °C with respect to the snowfall environment temperature equal to or lower than -5 °C. This means that the control device 11 performs control such that the temperature of the refrigerant is 55 °C when the temperature of the snowfall environment detected by the temperature sensor 21 is equal to or lower than -5 °C (a range H 7).

Fig. 8B shows a screen for setting the relationship between the snowfall environment temperature and the set temperature of the refrigerant at a point B. The point B is a point which determines the relationship between a lower limit value of the refrigerant temperature and the snow temperature environment temperature at the time of the "snow-melting operation". In the case of the example of Fig. 8B, the set temperature of the refrigerant is determined to be 30 °C with respect to the snowfall environment temperature of 10 °C. This means that the control device 11 performs control such that the temperature of the refrigerant is 30 °C when the temperature of the snowfall environment detected by the temperature sensor 21 is 10 °C (a range H9).

When the snowfall environment temperature is in the range H8, the graph G3 shows that the control device 11 performs control such that the temperature of the refrigerant becomes the heating set temperature corresponding to the temperature detected by the temperature sensor 21 in a line connecting the point A and the point B.

Next, processing of the temperature management system 1 at the time of the snow-melting operation will be described. First, the user sets the operation to "snow-melting operation." The operation reception unit 23 receives an input of the selection of "snow-melting operation" and records it in the storage unit 25. Next, the user performs an input of the set temperature from the setting screen exemplified in Figs. 8A and 8B. The set temperature reception unit 22 receives the input of setting information and records the received setting information in the storage unit 25. Next, if the user inputs operation start instruction information to the remote controller 20, the communication unit 24 transmits the operation start instruction information together with information on the selected operation ("snow-melting operation") and setting correspondence information to the control device 11. The control device 11 acquires these pieces of information and records them on a storage unit (not shown). The control device 11 starts the operation of the chilling unit 10. The temperature sensor 21 detects a snowfall environment temperature (for example, external temperature), and the communication unit 24 transmits the temperature information (external temperature) to the control device 11. Next, the control device 11 calculates the set temperature of the refrigerant according to the temperature detected by the temperature sensor 21 on the basis of the setting correspondence information in which the relationship between the snowfall environment temperature and the refrigerant set temperature that has been received from the remote controller 20 is determined. For example, when the setting information exemplified in Figs. 8A and 8B is recorded, if the temperature detected by the temperature sensor 21 is -5 °C., the control device 11 determines the set temperature of the refrigerant to be 55 °C. The control device 11 controls the refrigerant circuit 12 such that the temperature of the refrigerant is 55 °C.

According to the present embodiment, by laying the piping 30 on the roof, outer wall, and the like of a vinyl house where snow cover occurs, and installing the remote controller 20 in a place where the snowfall environment temperature can be detected (for example, above the inside of the house), a refrigerant (hot water) in accordance with the temperature detected by the temperature sensor 21 can be caused to circulate through the piping 30 to perform snow-melting of snow covering the roof and the like of the vinyl house.

In the case of "snow-melting operation", a snow cover sensor may be connected to the remote controller 20 or the control device 11 instead of the temperature sensor 21 (or in addition to the temperature sensor 21). When it is connected to the remote controller 20, control to raise and lower the refrigerant temperature according to a degree of snow cover detected by the snow cover sensor may be performed. In this case, for example, in the setting screen described with reference to Figs. 8A and 8B, it is configured to input a relationship between "the degree of snow cover" and "(heating) set temperature" instead of "snowfall environment temperature." When the snow cover sensor is connected to the control device 11, control to shift a refrigerant temperature value calculated by the remote controller 20 upward or downward in accordance with a detect situation of the snow cover sensor may also be performed.

In addition, it is possible to appropriately replace the constituent elements in the embodiment described above with known constituent elements in a range not departing from the spirit of the present invention. The technical scope of the present invention is not limited to the above embodiment, and various modifications can be made in the range not departing from the spirit of the present invention. For example, when piping valves on the load side are automatically or manually switched for each season, switching of the operation may be executed automatically with a schedule function of a remote control, or may also be performed by directly commanding a required operation to the control device 11. "Water temperature operation" in the embodiment is an example of the refrigerant temperature adjustment operation, "air conditioning operation" and "snow-melting operation" are examples of the load side temperature adjustment operation.

### [Industrial Applicability]

According to the chilling unit system, the temperature management system, the remote controller, and the control method described above, it is possible to supply a refrigerant at a temperature corresponding to a load using only a chilling unit without using a fan coil.

### [Reference Signs List]

1, 1A, 1B, 1C, 1' Temperature management system
10, 10' Chilling unit
11 Control device
12 Refrigerant circuit
20, 20' Remote controller
21 Temperature sensor
22 Set temperature reception unit
23 Operation reception unit
24 Communication unit
25 Storage unit
30, 30a, 30b, 30c Piping
40 Room
50a, 50b, 50c Fan Coil unit
55 Control device
56 Remote controller
G1, G2, G3 Graph

## Claims

1. A chilling unit system comprising:
a chilling unit configured to supply a refrigerant to piping laid on a load side;
a remote controller which is provided in a space on the load side and has a temperature sensor for detecting a temperature of the space; and
a control device configured to control the chilling unit,
wherein the control device controls the chilling unit such that a temperature of the refrigerant is a temperature corresponding to a temperature detected by the temperature sensor.

2. The chilling unit system according to claim 1,
wherein the remote controller further includes
an operation reception unit which is configured to receive a selection of one of a refrigerant temperature adjustment operation and a load side temperature adjustment operation,
the control device is configured to control the chilling unit such that a temperature of the refrigerant is a predetermined set temperature when the operation reception unit receives a selection of the refrigerant temperature adjustment operation, and
is configured to control the chilling unit such that the temperature of the refrigerant is a temperature corresponding to a temperature detected by the temperature sensor when the operation reception unit receives a selection of the load side temperature adjustment operation.

3. The chilling unit system according to claim 2,
wherein the remote controller further includes a set temperature reception unit which is configured to receive setting correspondence information in which correspondence between a temperature of the load side and a set temperature of the refrigerant is determined, and
the control device is configured to control the chilling unit such that the temperature of the refrigerant is a temperature corresponding to a temperature detected by the temperature sensor on the basis of setting correspondence information received by the set temperature reception unit when the operation reception unit receives a selection of the load side temperature adjustment operation.

4. The chilling unit system according to claim 2 or 3,
wherein a cooling operation which performs cooling of the space on the load side is included in the load side temperature adjustment operation.

5. The chilling unit system according to any one of claims 2 to 4,
wherein a heating operation which performs heating of the space on the load side is included in the load side temperature adjustment operation.

6. The chilling unit system according to any one of claims 2 to 5,
wherein a snow-melting operation for melting snow on the load side is included in the load side temperature adjustment operation.

7. A temperature management system comprising:
one or a plurality pieces of piping; and
the chilling unit system described in any one of claims 1 to 6, which is configured to supply a refrigerant that circulates through the piping.

8. A temperature management system comprising:
piping laid in a room of a vinyl house; and
the chilling unit system described in any one of claims 1 to 5, which is configured to supply a refrigerant circulating through the piping.

9. The temperature management system according to claim 8, further comprising:
snow-melting piping laid on at least one of a roof and an outer wall of the vinyl house; and
the chilling unit system described in claim 6, which is configured to supply a refrigerant circulating through the snow-melting piping.

10. A temperature management system comprising:
snow-melting piping laid on at least one of a roof and an outer wall of a vinyl house; and
the chilling unit system described in claim 6, which is configured to supply a refrigerant circulating through the snow-melting piping.

11. A remote controller of a chilling unit which is configured to supply a refrigerant to piping laid on a load side comprising:
a temperature sensor which is installed in a space on the load side and is configured to detect a temperature of the space on the load side.

12. A control method comprising:
transmitting, by a remote controller of a chilling unit which is provided in a space on a load side and has a temperature sensor for detecting a temperature of the space, temperature information detected by the temperature sensor to a control device of the chilling unit; and
performing, by the control device, control such that a temperature of a refrigerant supplied by the chilling unit is a temperature corresponding to temperature information received from the temperature sensor.
